# EUROPÄISCHE PATENTSCHRIFT

(11) **EP 0 704 330 B1**
(45) Veröffentlichungstag und Bekanntmachung des Hinweises auf die Patenterteilung: **11.03.1998**
(21) Anmeldenummer: 95113961.7
(22) Anmeldetag: 06.09.1995
(51) Int. Cl.: B60J 7/14

(54) **Umwandelbares Fahrzeugdach**
Transformable vehicle roof
Toit de voiture transformable

(30) Priorität: 30.09.1994 DE 4435222
(43) Veröffentlichungstag der Anmeldung: 03.04.1996
(73) Patentinhaber: WEBASTO KAROSSERIESYSTEME GmbH, D-82131 Stockdorf (DE)
(72) Erfinder: Danzl, Martin, D-80797 München (DE); Fürst, Arpad, D-82110 Germering (DE); Mayer, Johann, D-85238 Petershausen (DE); Miklosi, Stefan, D-81247 München (DE); Reihl, Peter, D-82319 Starnberg (DE)
(74) Vertreter: Wiese, Gerhard

(56) Entgegenhaltungen:
- EP-A- 0 482 681
- FR-A- 1 049 026
- US-A- 2 704 225

## Beschreibung

Die Erfindung betrifft ein umwandelbares Fahrzeugdach gemäß dem Oberbegriff des Patentanspruchs 1.

Bei einem derartigen Fahrzeugdach gemäß DE A1 42 03 229 ist ein die Heckscheibe umrahmendes Heckteil einstückig mit einem hinteren Dachteil ausgebildet, wobei die Heckscheibe vor dem Verschwenken des hinteren Dachteiles separat von diesem vorab in einen Stauraum versenkt werden muß. Durch diese separat verfahrbare Heckscheibe entsteht eine problematische Dichtungsstelle zur festen Fahrzeugkarosserie.

Der Erfindung liegt die Aufgabe zugrunde, ein umwandelbares Fahrzeugdach in seinem Aufbau zu vereinfachen.

Diese Aufgabe wird gemäß der vorliegenden Erfindung durch die Merkmale des Patentanspruchs 1 gelöst. Dadurch, daß das die Heckscheibe umfassende Heckteil vor dem vollständigen Versenken des Daches zunächst über das hintere Dachteil schwenkbar und anschließend mit diesem, sowie gegebenenfalls weiteren Dachteilen in den Stauraum verschwenkbar ist, ist eine einfache toleranzunempfindliche Dichtung der Heckscheibe von oben her auf einer Verdeckklappe möglich. Durch die Trennung des hinteren Dachteils vom Heckteil und deren Übereinanderfahren vor dem Verschwenken in den Stauraum ist überdies ein Verkleinern des Dachpaketes vor dem Verschwenken zu äußerst kompakten Abmaßen möglich. Vorteilhafte Ausgestaltungen der Erfindung sind den Unteransprüchen entnehmbar.

Eine hinsichtlich der Anzahl der erforderlichen Antriebe besonders einfache Ausführungsform ergibt sich dadurch, daß das Heckteil vor dem Verschwenken in den Stauraum mit dem hinteren Dachteil verriegelbar ist. Dadurch benötigt das hintere Dachteil keinen eigenen aktiven Antrieb, sonderen lediglich eine schwenkbare Lagerung gegenüber der Karosserie. Beim Verschwenken wird das hintere Dachteil von den Antrieben des Heckteiles mitgenommen.

Vorteilhafterweise umfaßt das Fahrzeugdach - wie an sich aus der eingangs genannten DE-A1 42 03 229 bekannt - wenigstens ein während der Fahrt öffnungsfähiges Dachteil (Deckel), das an in seitlich davon liegenden Dachteilen angeordneten Führungen in Fahrzeuglängsrichtung in beliebige Öffnungspositionen verfahrbar ist. Die seitlichen Dachteile sind vorzugsweise am hinteren Dachteil gelagert, unter oder über welches das öffnungsfähige Dachteil (Deckel) in geöffneter Position verfahrbar ist. Neben der größeren Vielfalt an Öffnungspositionen während der Fahrt ist ein solches, in weitere Dachteile unterteiltes Fahrzeugdach auch besonders kompakt verstaubar.

Eine besonders steife, unfallsichere Ausgestaltung eines Fahrzeugdaches ergibt sich dadurch, daß die seitlichen Dachteile mit einem feststehenden vorderen Dachteil verriegelbar sind.

Für ein kompaktes Zusammenfügen der Dachteile vor dem Verschwenken in den Stauraum ist es vorteilhaft, wenn die seitlichen Dachteile nach innen an das hintere Dachteil anschwenkbar sind, wie dies prinzipiell aus der DE A1 42 03 229 bekannt ist.

Gemäß einer vorteilhaften Ausgestaltung umfaßt das Heckteil eine Heckscheibe.

Vorteilhafterweise ist der Stauraum mittels einer Verdeckklappe verschließbar, auf der das Heckteil in seiner Grundposition von oben her dichtend anliegt.

Eine besonders glattflächige Gestaltung des geschlossenen Fahrzeugdaches ergibt sich dadurch, daß das Heckteil vor dem Verschwenken über das hintere Dachteil anhebbar ist.

Die Verschwenkung des Heckteils erfolgt gemäß einer vorteilhaften Ausgestaltung mittels zweier ausfahrbarer Hydraulikzylinder, die an einem schwenkbar an der Karosserie angeordneten Hebel gelagert sind. Dieser Hebel ist vorzugsweise als Dreieckshebel mit zwei am karosseriefesten Schwenkpunkt zusammenlaufenden Schenkeln ausgebildet, wobei am äußeren Ende der Schenkel jeweils einer der ausfahrbaren Hydraulikzylinder mit seinem unteren Ende angelenkt ist. Ferner ist vorteilhaft am unteren der beiden Schenkel des Dreieckshebels ein mit seinem anderen Ende karosseriefest gelagerter Schwenkzylinder angelenkt. Das hintere Dachteil ist über einen Schwenkhebel mit der Karosserie verbunden. Dieser Schwenkhebel ist gemäß einer vorteilhaften Variante nicht aktiv antreibbar, sondern dient bei geschlossenem Fahrzeugdach zur Stützung des hinteren Dachteils in Verbindung mit der Verriegelung der an diesem befestigten seitlichen Dachteile am vorderen Dachteil. Bei der Verschwenkung des hinteren Dachteils in den Stauraum wird dieses nach Verriegelung mit dem Heckteil gemeinsam mit diesem durch den Schwenkzylinder betätigt.

Zur Erleichterung einer kompletten Vorprüfung eines Dachmoduls bei einem Fahrzeugzulieferer sowie der Montage beim Fahrzeughersteller ist vorgesehen, daß der Schwenkpunkt des Dreieckshebels sowie die unteren Anlenkpunkte des Schwenkzylinders und des Schwenkhebels an einer Kassette angeordnet sind, die ihrerseits an der Karosserie des Fahrzeugs justierbar befestigt ist. Somit kann das komplette aus den bewegbaren Dachteilen bestehende Dachmodul beim Fahrzeugzulieferer in einer der Rohkarosse entsprechenden Vorrichtung komplett montiert und vorgeprüft werden. Durch die Zusammenfassung aller Betätigungsorgane an einer Kassette ist die Montage beim Fahrzeughersteller wesentlich erleichtert.

Gemäß einer vorteilhaften alternativen Ausgestaltung ist das Heckteil bei seinen Schwenkbewegungen mittels zweier schwenkbar an der Karosserie angeordneter Hebel geführt. Vorzugsweise ist einer dieser Hebel mit einem Hydraulikzylinder gekoppelt. Vorteilhaft bilden beide Hebel ein Viergelenk, in dem das Heckteil eine Koppel und in dem die Karosserie oder ein mit dieser fest verbundenes Teil das Gestell bilden. Bei dieser Ausführungsform wird das Heckteil mittels eines von zwei Hebeln gebildeten Viergelenkes geschwenkt, und benötigt für den Antrieb lediglich einen einzigen Hydraulikzylinder.

Gemäß einer vorteilhaften Weiterentwicklung der alternativen Ausgestaltung ist vorgesehen, daß der eine Hebel über ein zusätzliches Getriebeglied mit der Karosserie verbunden ist, gegenüber dem er mittels einer Arretierung verriegelbar ist, die in der letzten Phase des Verschwenkens in den Stauraum lösbar ist. Das Vorsehen eines zusätzlichen Getriebegliedes und einer Arretierung ermöglicht ein weiteres Absenken in den Stauraum ohne zusätzlichen Stauraum für die Verschwenkhebel zu beanspruchen.

Vorteilhafterweise ist zur Verriegelung des Heckteils mit dem hinteren Dachteil ein Haltebügel vorgesehen, der mit einem Ende schwenkbar am Heckteil gelagert ist und mit einem Gleitstift während des Verschwenkens des Heckteils über das hintere Dachteil in eine Kulisse eingreift, welche ein Riegelteil des Haltebügels in eine Aufnahme am hinteren Dachteil einführt. Durch eine solche Kulisse kann der das Heckteil mit dem hinteren Dachteil verbindende Haltebügel während der Schwenkbewegung des hinteren Dachteils ohne zusätzlichen Antrieb in Eingriff gebracht werden.

Für eine Verrastung des am Haltebügel vorgesehenen Riegelteils mit der Aufnahme am hinteren Dachteil ist es vorteilhaft, wenn ein Rastelement von einem Auslaufkabel eines das öffnungsfähige Dachteil betätigenden Antriebes betätigt wird.

Ein zur Ausstattung mit einem erfindungsgmäßen Fahrzeugdach besonders geeignetes Fahrzeug mit einem hinter den Vordersitzen angeordneten Stauraum weist vorzugsweise eine eine Sitzfläche und eine Rückenlehne umfassende hintere Sitzbank auf, die im aufgestellten Zustand des Fahrzeugdaches als Notsitzbank nutzbar ist und deren Rücklehne zur Vergrößerung des Stauraumes vor der Umwandlung des Daches hinter die Lehne der Vordersitze verfahrbar ist. Vorzugsweise ist in die Rückenlehne der Notsitzbank ein ausfahrbares Windschott integriert.

Nachfolgend ist ein Ausführungsbeispiel der Erfindung anhand der Zeichnung erläutert. Es zeigt:
- Fig. 1: eine schematische Seitenansicht eines Fahrzeuges mit einem umwandelbaren Fahrzeugdach in geschlossener Position des Daches,
- Fig. 2: eine Draufsicht auf das Fahrzeug gemäß Fig. 1,
- Fig. 3: eine schematische Seitenansicht mit ausgestelltem Heckteil und verschiedenen Deckelpositionen,
- Fig. 4: eine schematische Seitenansicht mit hochgeschwenktem Heckteil und vollständig geöffnetem Deckel,
- Fig. 5: eine schematische Seitenansicht mit über das hintere Dachteil geschwenkten Heckteil,
- Fig. 6: eine schematische Seitenansicht mit teilweise nach hinten geschwenktem Dachpaket,
- Fig. 7: eine schematische Seitenansicht mit vollständig nach hinten geschwenktem Dachpaket und angeklappten seitlichen Dachteilen,
- Fig. 8: eine schematische Seitenansicht mit vollkommen in den Stauraum eingezogenem Dachpaket,
- Fig. 9: einen Teillängsschnitt durch die Verbindungsstelle zwischen Heckteil und Verdeckklappe,
- Fig. 10: eine schematische perspektivische Ansicht des Fahrzeugdachs mit teilweise geöffnetem Deckel,
- Fig. 11: eine schematische perspektivische Ansicht des Daches mit hochgeschwenktem Heckteil,
- Fig. 12: eine schematische perspektivische Ansicht des Daches mit nach hinten geschwenktem Dachpaket während des Anschwenkens der seitlichen Dachteile,
- Fig. 13: eine schematische perspektivische Ansicht des gesamten Fahrzeugdachmoduls bei der Montage ins Fahrzeug,
- Fig. 14: eine schematische Seitenansicht einer alternativen Ausführungsform in geschlossener Position des Daches,
- Fig. 15: eine Ansicht gemäß Fig. 14 mit hochgeschwenktem Heckteil,
- Fig. 16: eine Ansicht gemäß Fig. 14 mit teilweise nach hinten geschwenktem Dachpaket,
- Fig. 17: eine Ansicht gemäß Fig. 14 mit vollständig in den Stauraum eingezogenem Dachpaket,
- Fig. 18: eine vergrößerte Darstellung der Schwenkmechanik des Heckteils,
- Fig. 19: eine vergrößerte Darstellung der Arretierung zwischen einer Lenkerstange und einem Lenkerwinkel und
- Fig. 20: eine vergrößerte Darstellung der Verriegelungsmechanik zwischen hinterem Dachteil und Heckteil.

Ein Fahrzeug 1 weist eine Karosserie 2 mit einem insgesamt mit 3 bezeichneten Fahrzeugdach auf. Das Fahrzeugdach 3 ist als umwandelbares Fahrzeugdach aus verschiedenen Teilen zusammengesetzt und ist als Dachmodul in die Rohkarosserie 2 einsetzbar. Es schließt sich nach hinten an einen oberhalb einer Frontscheibe des Fahrzeugs 1 verlaufenden, als vorderes Dachteil fungierenden Windlauf 4 nach hinten an. Das modulare umwandelbare Fahrzeugdach 3 umfaßt seitliche Dachteile 5, die mit ihrem vorderen Ende lösbar mit dem Windlauf 4 verriegelt sind. Mit ihrem hinteren Ende sind die seitlichen Dachteile 5 an ein hinteres Dachteil 7 schwenkbar angelenkt. Die seitlichen Dachteile 5 weisen jeweils an ihrer Innenseite eine nicht im einzelnen dargestellte Führungsschiene auf, welche die Mechanik eines öffnungsfähigen Dachteiles (Deckel) 6 in einer von Schiebehebedächern allgemein bekannten Art und Weise führt. Der Deckel 6 ist über das feste Fahrzeugdach ausstellbar oder nach hinten in eine Öffnungsposition verschiebbar, bei der er in das hintere Dachteil 7 eingeschoben wird.

Der Deckel 6 kann alternativ dazu auch nach Art eines Spoilerdeckels in Öffnungsposition über das hintere Dachteil 7 verfahrbar sein. Ebenso können statt eines Deckels 6 mehrere Deckel oder Lamellen vorgesehen sein, die sich in Öffnungsposition unter oder über das hintere Dachteil 7 legen. In einer nicht gezeigten, besonders einfachen Variante umfaßt das Fahrzeugdach kein während der Fahrt öffnungsfähiges Dachteil und keine seitlichen Dachteile, sondern das hintere Dachteil schließt mit seiner Vorderkante unmittelbar an den Windlauf 4 an.

An das hintere Dachteil 7 schließt sich nach hinten ein Heckteil 8 an, in welches eine Heckscheibe 9 eingesetzt ist. Das Heckteil 8 sitzt von oben her dichtend auf einer Verdeckklappe 20 auf, die den Übergang zu einer dahinterliegenden nicht bezeichneten Kofferraumhaube bildet.

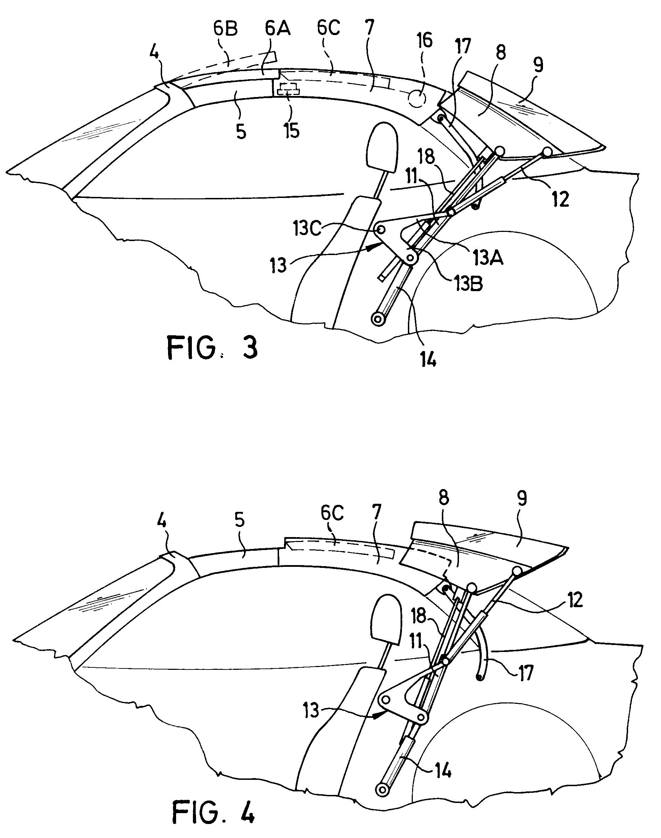

In Fig. 3 sind verschiedene Öffnungspositionen des Deckels 6 dargestellt. Mit 6A ist die Schließposition des Deckels 6 bezeichnet, mit gestrichelten Linien und der Bezugszahl 6B ist eine Ausstellposition des Deckels 6 angedeutet und mit 6C die vollständig aufgeschobene Position des Deckels 6, bei der dieser vom hinteren Dachteil 7 aufgenommen wird. Der Antrieb des Deckels erfolgt in bekannter Weise wie bei konventionellen Schiebehebedächern über nicht gezeigte drucksteif geführte Kabel mittels eines elektrischen Antriebes 16, der im hinteren Dachteil 7 angeordnet ist.

Die seitlichen Dachteile 5 sind schwenkbar am hinteren Dachteil 7 angelenkt und können mittels eines Antriebes 15 nach Lösen der Verriegelung zum Windlauf 4 und nach leichtem Zurückschwenken des Dachpaketes nach innen an das hintere Dachteil 7 angeschwenkt werden.

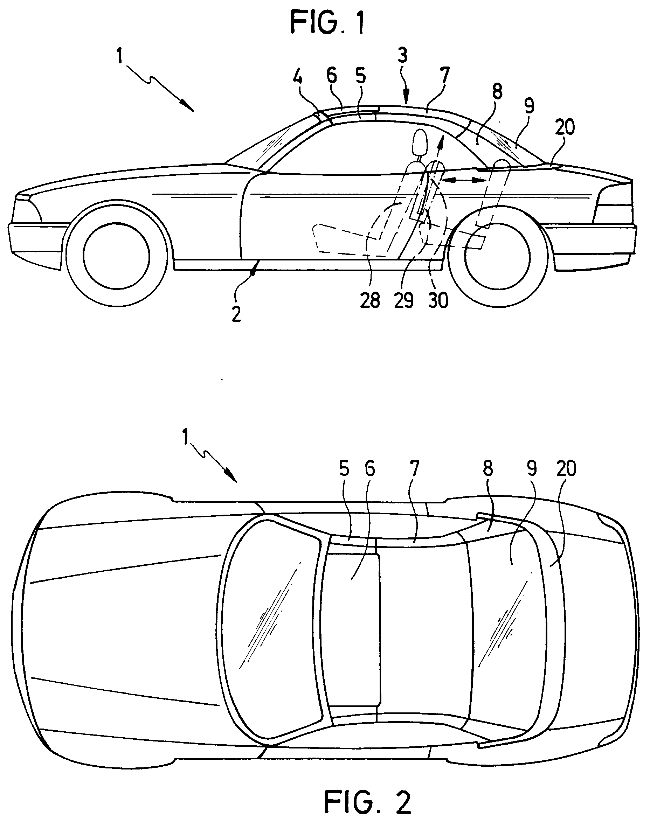

An der Karosserie 2 ist im Bereich zwischen den Vordersitzlehnen 28 (Fig. 1) und den Rücksitzlehnen 29 (Fig. 1) im Bereich der Seitenwand ein als Dreieckshebel 13 ausgebildeter Hebel mit einem Schwenkpunkt 13C schwenkbar gelagert. Der Dreieckshebel 13 weist einen oberen Schenkel 13A und einen unteren Schenkel 13B auf, die sich etwa im Bereich des Schwenkpunktes 13C treffen. Am freien Ende des unteren Schenkels 13B des Dreieckshebels 13 greift ein als Hydraulikzylinder ausgebildeter Schwenkzylinder 14 an. Das andere Ende des Schwenkzylinders 14 ist drehbar mit der Karosserie 2 verbunden. Durch Ein- und Ausfahren des Schwenkzylinders 14 ist der Dreieckshebel 13 um den Schwenkpunkt 13C in einem bestimmten Winkelbereich drehbar. Mit dem Dreieckshebel 13 fest verbunden ist das untere Ende eines Hydraulikzylinders 11 sowie eine parallel dazu angeordnete Teleskopführung 18, welche beide mit ihrem oberen Ende an einem vorderen unteren Eck des Heckteils 8 angelenkt sind. Am freien Ende des Schenkels 13A ist ferner ein weiterer Hydraulikzylinder 12 befestigt, dessen anderes Ende in einem Abstand hinter dem Anlenkpunkt des Hydraulikzylinders 11 am Heckteil 8 angelenkt ist. Das hintere Dachteil 7 ist mittels eines Schwenkhebels 17 an der Karosserie 2 schwenkbar angelenkt. Bei geschlossener Verriegelung zwischen seitlichen Dachteilen 5 und dem Windlauf 4 bilden der Windlauf 4, die seitlichen Dachteile 5 und das hintere Dachteil 7 in Verbindung mit dem Schwenkhebel 17 einen steifen Überrollkäfig.

In Fig. 3 ist eine erste Öffnungsphase des Fahrzeugdaches 3 dargestellt. Dabei wird das hintere Dachteil 8 durch Ausfahren der Hydraulikzylinder 11 und 12 vom hinteren Dachteil 7 und von der in Fig. 1 und 2 dargestellten Verdeckklappe 20 nach oben hin abgehoben.

In Fig. 4 ist das Heckteil 8 durch teilweises Ausfahren des Schwenkzylinders 14 und die dadurch bewirkte Drehung des Dreieckshebels 13 im Gegenuhrzeigersinn teilweise über das hintere Dachteil 7 geschwenkt. Der steife Überrollkäfig aus Schwenkhebel 17, hinterem Dachteil 7, seitlichen Dachteilen 5 und Windlauf 4 bleibt dabei unverändert aufrechterhalten.

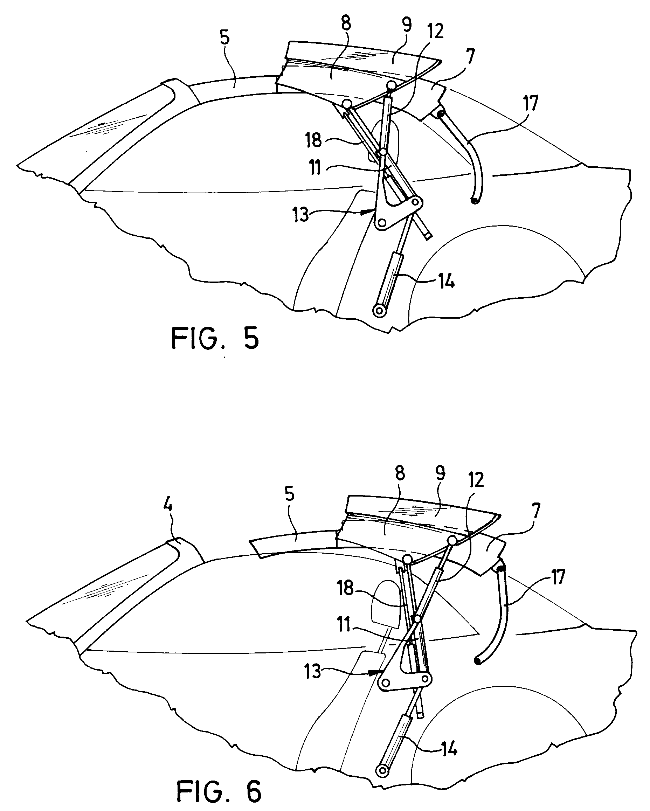

In Fig. 5 ist der Schwenkzylinder 14 vollständig ausgefahren. Der Dreieckshebel 13 ist dadurch bis in seine Endlage im Gegenuhrzeigersinn nach oben geschwenkt. Das Heckteil 8 hat sich vollständig über das hintere Dachteil 7 gelegt. In dieser Position werden das Heckteil 8 und das hintere Dachteil 7 miteinander verriegelt. Hierzu sind hakenförmige Elemente an der Innenseite des Heckteiles 8 vorgesehen, in welche aus dem hinteren Dachteil 7 ausfahrbare Riegelelemente eingreifen. Diese Riegelelemente können vorzugsweise mittels des Antriebes 16 für den Deckel 6 oder aber mittels des Antriebes 15 für die Schwenkung der seitlichen Dachteile betätigt werden.

Zwischen Fig. 5 und der Position, die in Fig. 6 dargestellt ist, wurde die Verriegelung zwischen seitlichen Dachteilen 5 und dem Windlauf 4 gelöst. Diese Verriegelung kann, wie von normalen Cabrioletdächern her bekannt, mittels eines im Windlauf 4 angeordneten Antriebes betätigt werden. Nach Lösen der Verriegelung zwischen seitlichen Dachteilen 5 und Windlauf 4 wurde der Schwenkzylinder 14 teilweise eingefahren, wodurch sich das Dachpaket aus Heckteil 8 und hinterem Dachteil 7 unter gleichzeitiger Führung durch den Dreieckshebel 13 und den Schwenkhebel 17 um einen Betrag nach hinten bewegt hat. In dieser Phase werden die Antriebe 15 aktiviert, wodurch die seitlichen Dachteile 5 nach innen an das hintere Dachteil 7 angeschwenkt werden.

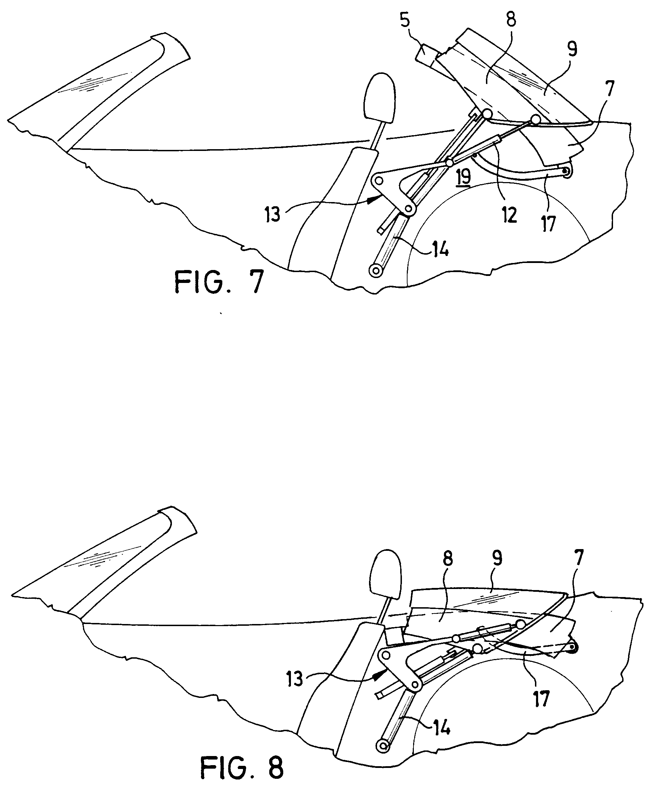

In Fig. 7 ist der Schwenkzylinder 14 vollständig eingefahren, wodurch der Dreieckshebel 13 in seine am weitesten nach unten gedrehte Position geschwenkt wurde. Das Dachpaket aus hinterem Dachteil 7, Heckteil 8 und angeklappten seitlichen Dachteilen 5 ist dadurch in seine hinterste Position geschwenkt worden. Durch anschließendes Einziehen der Hydraulikzylinder 11 bzw. 12 gemäß Fig. 8 wird das Dachpaket mit seiner Vorderkante abgesenkt und dadurch vollständig in einen Stauraum 19 (Fig. 7) eingezogen. Das Dachpaket ist nunmehr gegenüber der Gürtellinie des Fahrzeuges 1 vollständig versenkt und gleicht bei anschließend von oben her den Stauraum 19 abdeckender Verdeckklappe 20 einem herkömmlichen Cabriolet.

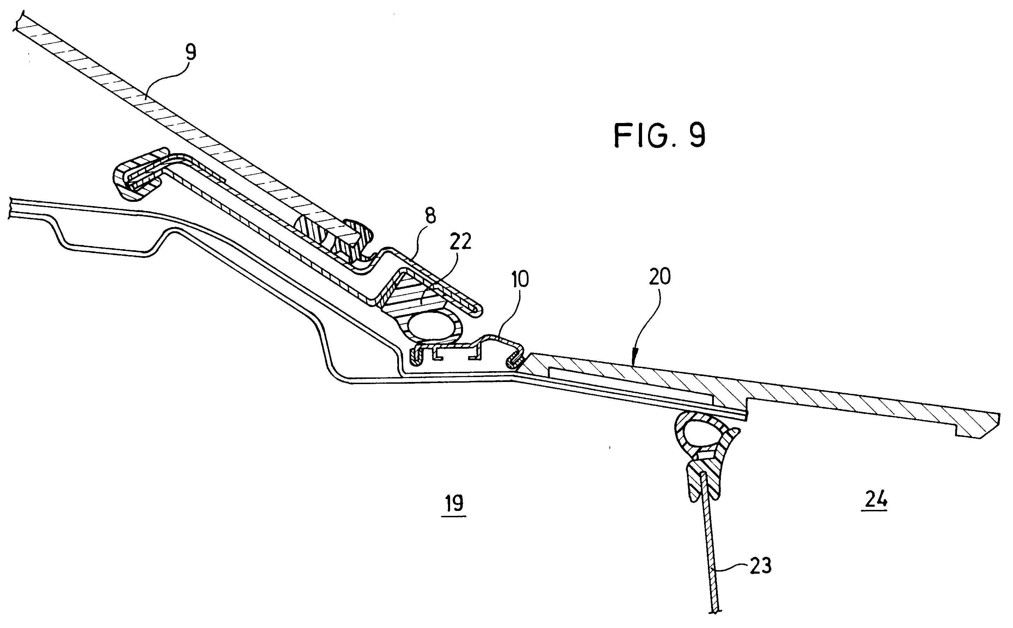

In Fig. 9 ist die Verbindungsstelle zwischen Heckteil 8 und der Verdeckklappe 20 im Detail dargestellt. Wie dort ersichtlich, legt sich das Heckteil 8 von oben her mit einer Dichtung 22 an ein mit der Verdeckklappe 20 verbundenes Blechteil 10 an. Dadurch wird zum einen eine gute Abdichtung erreicht und zum anderen ist diese Verbindungsstelle toleranzunempfindlich, d.h. sie kann in Längsrichtung des Fahrzeuges 1 Toleranzen, die sich bei der Fertigung der Karosserie 2 und des Fahrzeugdaches 3 ergeben, im Bereich von mehreren Millimetern ausgleichen. In Fig. 9 ist ferner eine Trennwand 23 dargestellt, mittels der der Stauraum 19 von einem dahinter liegenden Kofferraum 24 abteilbar ist. Die Trennwand 23 kann versenkbar ausgebildet sein, sodaß bei aufgestelltem Fahrzeugdach 3 der Kofferraum 24 um den Stauraum 19 vergrößert werden kann. Vor dem Versenken des Fahrzeugdaches 3 wird die Trennwand 23 geschlossen und dadurch der Kofferraum 24 begrenzt.

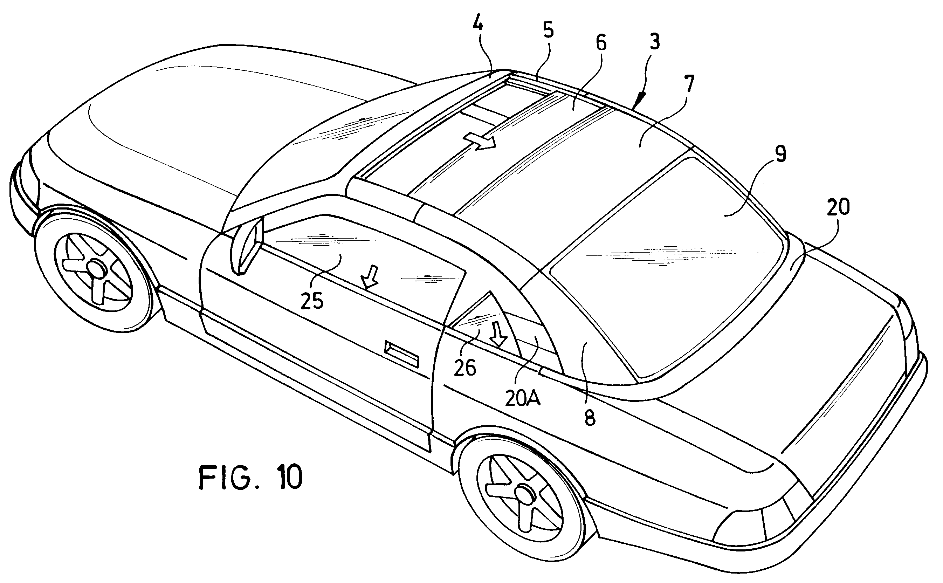

Aus der Darstellung gemäß Fig. 10 wird deutlich, daß das Fahrzeug 1 bei aufgestelltem Fahrzeugdach 3 den Eindruck eines geschlossenes Coupes vermittelt. Bei diesem kann der Deckel 6 in beliebige Öffnungspositionen verfahren werden, weitere Lüftungsmöglichkeiten ergeben sich in bekannter Weise durch das Absenken einer Seitenscheibe 25 oder eines hinteren Seitenfensters 26. Im Bereich der hinteren Seitenfenster 26 sind innenliegend davon seitliche Verdeckklappen 20A dargestellt, welche in Verbindung mit der Verdeckklappe 20 in der Draufsicht ein geschlossenes U-förmiges Abdeckteil ergeben. In diesem Zustand ist die in Fig. 1 angedeutete, mit einer Rücksitzlehne 29 versehene Rückbank als Notsitzbank benutzbar. Vor dem Verschwenken des Fahrzeugdaches 3 in den Stauraum 19 wird die Rücksitzlehne 29 längs an den Seitenwänden der Karosserie 2 befestigter Führungsschienen nach vorne gefahren, sodaß sie sich von hinten an die Vordersitzlehne 28 anlegt. Vorzugsweise ist in der Rücksitzlehne 29 ein ausfahrbares Windschott 30 integriert, welches nach vollständigem Versenken des Fahrzeugdaches 3 aktiviert werden kann.

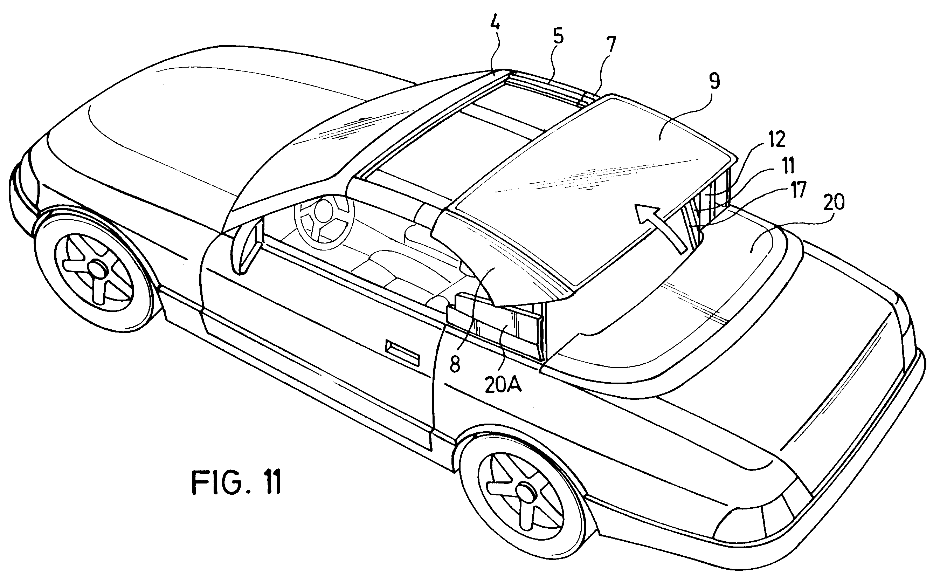

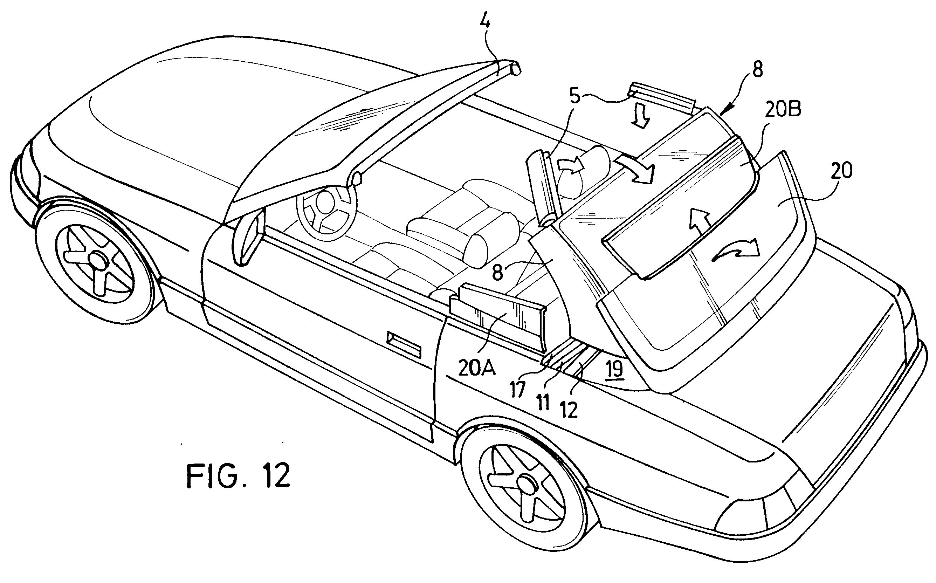

In Fig. 11 ist das Heckteil 8 bei vollständig geöffnetem Deckel 6 über das hintere Dachteil 7 geschwenkt und mit diesem verriegelt. Die Seitenscheiben 25 und die hinteren Seitenfenster 26 sind vollständig versenkt. Die seitlichen Verdeckklappen 20A sind aufgestellt um dadurch den Stauraum 19 für das anschließende Verschwenken des Dachpaketes freizugeben. In Fig. 12 ist auch die Verdeckklappe 20 nach oben geschwenkt wodurch der Stauraum 19 vollständig von oben her zugänglich ist. Aus der Verdeckklappe 20 ist wie aus Fig. 12 zu ersehen, ferner nach vorne eine weiteres Abdeckteil 20B ausfahrbar, welches in Verbindung mit den seitlichen Verdeckklappen 20A und der Verdeckklappe 20 eine geschlossene Abdeckung ergibt. In Fig. 12 ist das Dachpaket teilweise nach hinten geschwenkt und die seitlichen Dachteile 5 sind während ihrer Anschwenkbewegung an das hintere Dachteil 7 dargestellt.

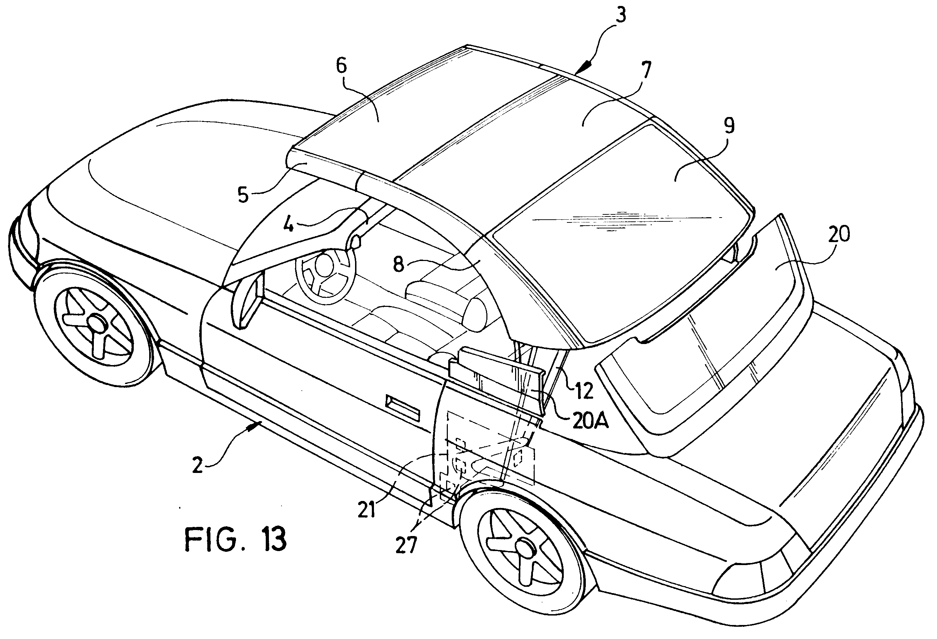

In Fig. 13 ist das gesamte modulare Fahrzeugdach 3 als Zulieferteil dargestellt, welches in die Karosserie 2 eingepaßt wird. Das aus den seitlichen Dachteilen 5, dem hinteren Dachteil 7, dem Heckteil 8 und dem Deckel 6 bestehende Fahrzeugdach 3 wird komplett vormontiert und vorgeprüft angeliefert. An der Karosserie sind die Verdeckklappe 20 sowie die seitlichen Verdeckklappen 20A montiert und geöffnet. An der Karosserie 2 ist der Schwenkzylinder 14 vormontiert und sind ferner Befestigungspunkte 27 vorgesehen, an denen eine Kassette 21 justierbar in Höhe und Längsrichtung befestigbar ist, die mit dem Fahrzeugdach 3 angeliefert wird, und an der der Schwenkhebel 17, der Dreieckshebel 13 sowie die Hydraulikzylinder 11 und 12 mit der Teleskopführung 18 vormontiert sind. Durch die komplette Vorprüfung und Vormontage des modularen Fahrzeugdaches 3 reduziert sich der Montageaufwand beim Fahrzeughersteller auf ein Minimum und das Fahrzeugdach 3 ist aufgrund der einfachen Justierung der Kassette 21 gegenüber den Befestigungspunkten 27 in festen Takten am Band montierbar.

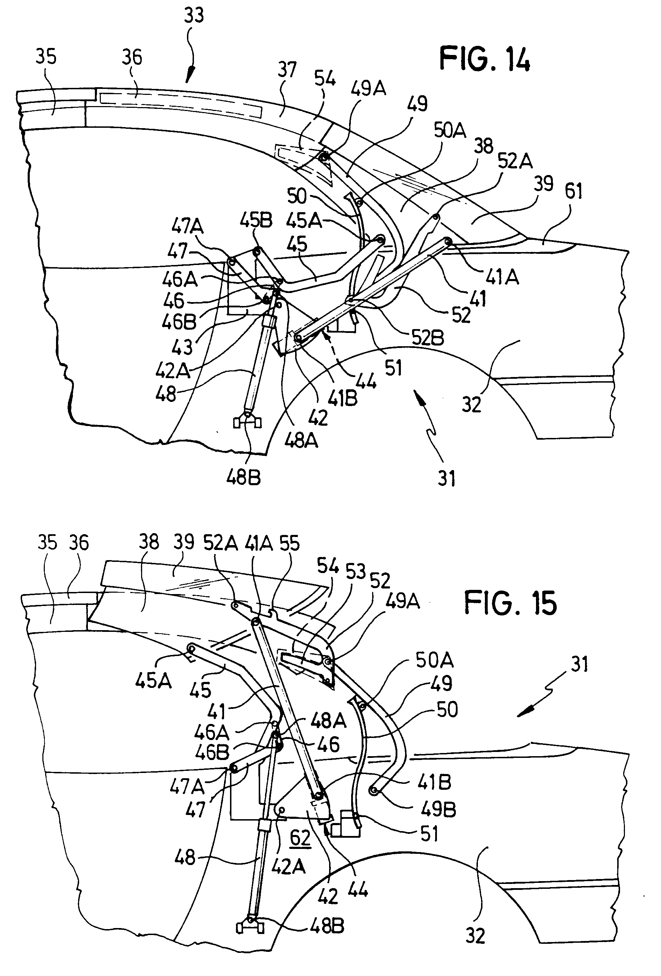

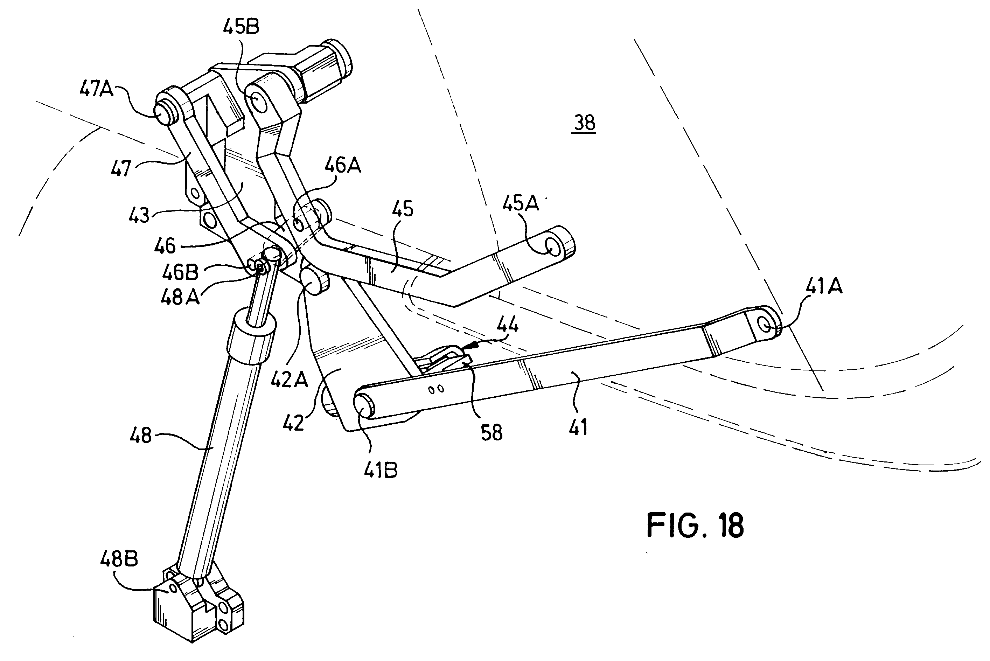

In den Fign. 14-20 ist eine alternative Ausführungsform dargestellt. Ein Fahrzeug 31 weist eine Karosserie 32 mit einem mehrere öffnungsfähige Teile umfassenden, insgesamt mit 33 bezeichneten Fahrzeugdach, auf. Wie im ersten Ausführungsbeispiel ist ein nach Art eines herkömmlichen Schiebedaches oder Schiebehebedaches öffnungsfähiges Dachteil (Deckel 36) an seitlichen Dachteilen 35 verschiebbar gelagert. Die seitlichen Dachteile 35 stehen analog zum ersten Ausführungsbeispiel bei geschlossenem Fahrzeugdach mit einem vorne quer verlaufenden Windlauf in Verriegelungsposition. Das öffnungsfähige Dachteil 36 wird in voll geöffneter Stellung in ein dahinterliegendes hinteres Dachteil 37 eingefahren. An das hintere Dachteil 37 schließt sich ein Heckteil 38 an, das eine Heckscheibe 39 umfaßt.

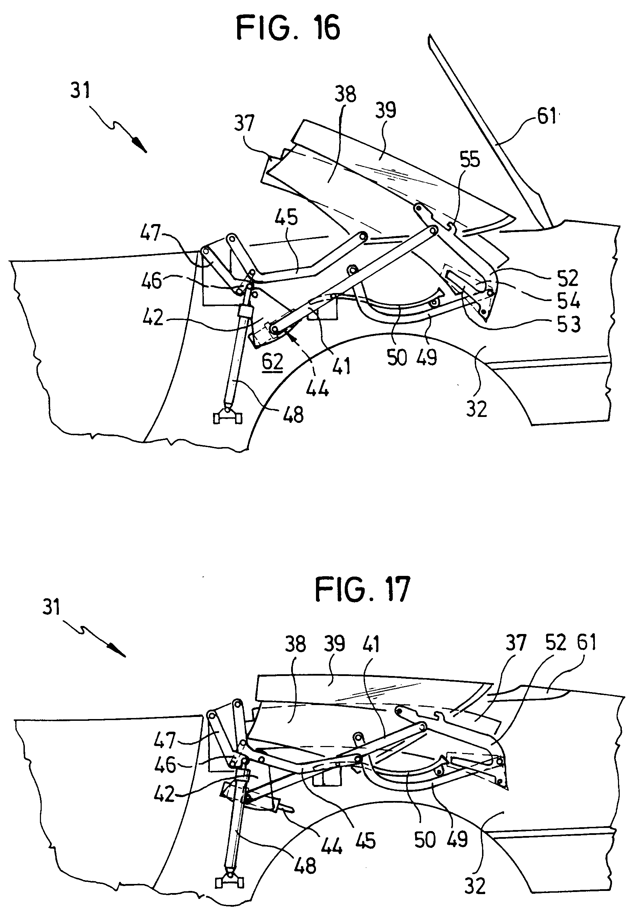

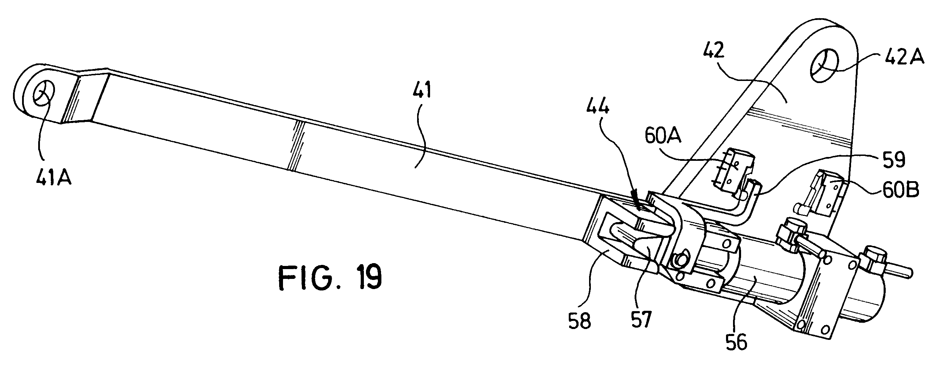

Das Heckteil 38 ist mittels einer Lenkerstange 41 in einem oberen Drehpunkt 41A schwenkbar verbunden. Die Lenkerstange 41 ist mit ihrem unteren Ende 41B mit einem Lenkerwinkel 42 verbunden, der in einem Drehpunkt 42A an einem karosseriefesten Lagerbock 43 schwenkbar befestigt ist. Die Verbindung des Lenkerwinkels 42 mit dem Lagerbock 43 ist derart, daß eine an sich gegebene Verschwenkbarkeit beider Elemente zueinander während bestimmter Bewegungsphasen mittels einer insgesamt mit 44 bezeichneten Arretierung unterbunden werden kann. Die Arretierung wird im einzelnen in Zusammenhang mit Fig. 19 erläutert. Sie ist in den Fign. 14-16 wirksam und wird beim vollständigen Absenken zwischen der in Fig. 16 dargestellten Position und der in Fig. 17 dargestellten Position gelöst, sodaß dabei eine Relativbewegung zwischen Lenkerstange 41 und Lenker 42 erfolgen kann.

Das Heckteil 38 ist ferner in einem Drehpunkt 45A schwenkbar mit einem Verdeckhebel 45 verbunden, der mit seinem anderen Ende bei 45B schwenkbar am karosseriefesten Lagerbock 43 befestigt ist. Zwischen den Gelenken 45A und 45B greift am Verdeckhebel 45 ein bei 46A schwenkbar angelenkter Antriebslenker 46 an, dessen anderes Ende 46B schwenkbar mit einem Antriebshebel 47 verbunden ist. Der Antriebshebel 47 ist mit einem Ende 47A am Lagerbock 43 schwenkbar gelagert; an seinem anderen Ende greift ein bei 48A schwenkbar angelenkter Hydraulikzylinder an, der als Hauptzylinder 48 die Schwenkbewegung des Heckteiles 38 bewirkt. Das untere Ende des Hauptzylinders 48 ist in einem karosseriefest angeordneten Lager 48B schwenkbar gelagert.

Der Antriebshebel 47 und der Verdeckhebel 45 bilden mit dem Antriebslenker 46 als Koppel und dem Lagerbock 43 als Gestell ein Viergelenk. Gleichzeitig bilden der Verdeckhebel 45, die bei wirksamer Arretierung 44 starr mit dem Lenkerwinkel 42 verbundenen Lenkerstange 41 mit dem als Koppel wirkenden Heckelement 38 und dem als Gestell wirkenden Lagerbock 43 ein zweites Viergelenk. Durch diese Auslegung ist eine besonders stabile und sichere Führung des Heckelementes 38 in allen Bewegungsphasen gewährleistet.

Das hintere Dachteil 37 ist an einem Gelenkpunkt 49A mit einem Dachhebel 49 schwenkbar verbunden, dessen unteres Ende bei 49B schwenkbar an der Karosserie 32 befestigt ist. In Verbindung mit den am vorderen Windlauf verriegelten seitlichen Dachteilen 35 bildet das hintere Dachteil 37 mit den beidseitig angeordneten Dachhebeln 49 in der Grundposition gemäß Fig. 14 einen stabilen Überrollkäfig.

Zwischen den Gelenken 49A und 49B ist am Dachhebel 49 eine Kulisse 50 an einem Gelenkpunkt 50A schwenkbar befestigt. Die Kulisse 50 hat eine S-förmige Krümmung und steht mit ihrem unteren Ende mit einem Führungsbolzen 51 im Eingriff, der karosseriefest angeordnet ist. Der gleitende Eingriff des Führungsbolzens 51 ermöglicht eine Verschiebung und eine Verschwenkung der Kulisse 50 um diesen Führungsbolzen 51.

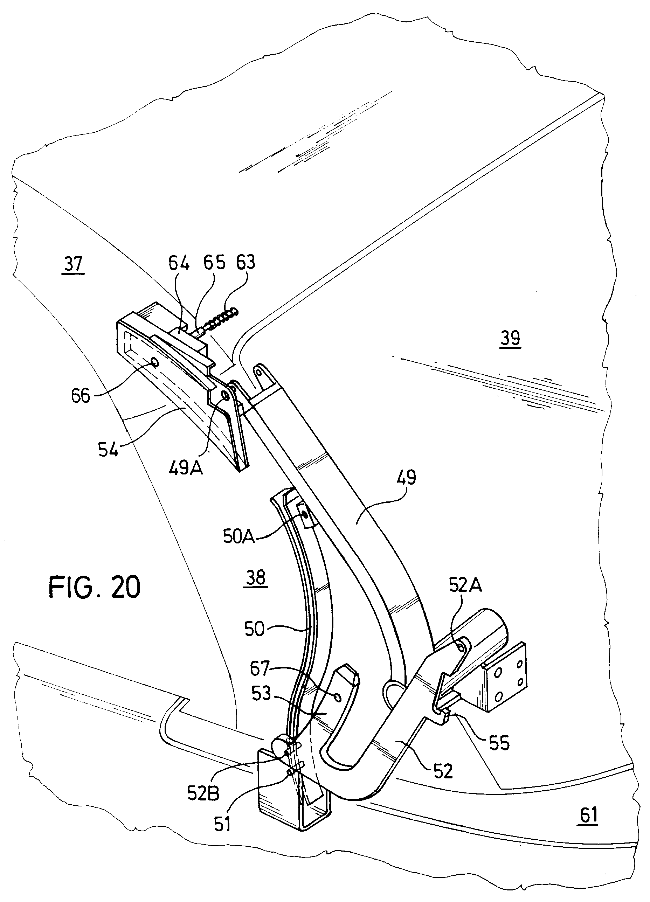

Am Heckteil 38 ist mit einem Anlenkpunkt 52A ein Haltebügel 52 schwenkbar befestigt, der ein etwa U-förmiges Aussehen hat und an dessen unterer Ecke im Verbindungsbereich zwischen beiden Schenkeln des U ein Gleitstift 52B befestigt ist, der oberhalb des Führungsbolzens 51 gleitend in die Kulisse 50 eingreift. Der Haltebügel 52 ist vergrößert in Fig. 20 dargestellt und wird weiter unten eingehend beschrieben. Er dient zur Verbindung des Heckteiles 38 mit dem hinteren Dachteil 37.

In Fig. 19 ist die Anbindung der Lenkerstange 41 an den Lenkerwinkel 42 mit der Arretierung 44 im Detail dargestellt. An der Innenseite des Lenkerwinkels 42 ist ein Hydraulikzylinder 56 befestigt, der mit seinem Kolben eine Riegelnase 57 hin-und herschiebt. Beim Ausfahren des Kolbens des Hydraulikzylinders 56 gerät die Riegelnase 57 in Eingriff mit einer Riegelfalle 58, die an der Innenseite der Lenkerstange 41 befestigt ist. Ein seitlich an der Riegelnase 57 befestigter Schaltbügel 59 wirkt mit zwei Mikroschaltern 60A und 60B für eine Abschaltung des Hydraulikzylinders 56 in den beiden Endlagen zusammen. Die in Fig. 19 dargestellte Verriegelungsposition der Arretierung 44 entspricht den in Fig. 14 bis 16 dargestellten Bewegungsphasen. Beim weiteren Versenken des Fahrzeugdaches von der in Fig. 16 dargestellten Position bis in die Endlage gemäß Fig. 17 wird die Riegelnase 57 außer Eingriff mit der Riegelfalle 58 gebracht, wodurch sich die Lenkerstange 41 relativ zum Lenkerwinkel 42 verdreht und dadurch ein flacheres Einziehen des Dachpaketes in den Stauraum 62 ermöglicht.

In Fig. 20 ist die zur Verriegelung des Heckteiles 38 mit dem hinteren Dachteil 37 dienende Mechanik vergrößert dargestellt. Der Haltebügel 52 weist an seinem etwas kürzeren vorderen Schenkel ein Riegelteil 53 auf. Eine an die Form dieses Riegelteiles 53 angepaßte Aufnahme 54 ist an der Unterseite des hinteren Dachteiles 37 befestigt. Bei der Schwenkbewegung des Heckteiles 38 aus der in Fig. 14 dargestellten Position in die in Fig. 15 dargestellte Position wird der Haltebügel 52 durch seine Anlenkung am Gelenk 52A vom Heckteil 38 mit nach oben geschleppt. Durch den Eingriff des Gleitstiftes 52B in die Kulisse 50 wird das Riegelteil 53 dabei während der Schwenkbewegung exakt in die Aufnahme 54 eingeführt. Nachdem das Riegelteil 53 im letzten Teil der Schwenkbewegung bereits von der Aufnahme 54 geführt wird, verläßt der Gleitstift 52B die Kulisse 50 an deren oberen Ende. Wenn bei Beendigung der Schwenkbewegung des Heckteiles 38 das Riegelteil 53 vollständig in die Aufnahme 54 eingeschoben ist, liegt eine im Riegelteil 53 vorgesehene Bohrung 67 deckungsgleich zu einer Bohrung 66 in der Aufnahme 54. Durch eine kurze Betätigung des nicht dargestellten, jedoch analog zum ersten Ausführungsbeispiel angeordneten, dort mit 16 bezeichneten Antriebes für das bewegbare Dachteil 36 wird ein mit dessen Auslaufkabel 63 verbundener Riegelstift 65, der in einem Führungstück 64 an der Aufnahme 54 verschiebbar gelagert ist, als Rastelement in beide Bohrungen 66 bzw. 67 eingeschoben, wodurch eine vollständige Verriegelung des Heckteiles 38 mit dem hinteren Dachteil 37 bewirkt wird. Der Haltebügel 52 weist an seinem längeren Schenkel an der Außenseite eine Anlagenase 55 auf, gegen die sich das Heckteil 38 mit seiner Unterseite aufgrund der eigenen Gewichtskraft anlegt und bei den folgenden Schwenkbewegungen auch in ständiger Anlage bleibt.

Nachfolgend soll der Bewegungsablauf bei einer Öffnung des Fahrzeugdaches anhand der Fign. 14-17 beschrieben werden.

In Fig. 14 ist das öffnungsfähige Dachteil 36 in das hintere Dachteil 37 eingefahren. Die seitlichen Dachteile 35 sind noch mit dem vorderen Windlauf verriegelt. Die Seitenscheiben sind abgesenkt. Durch Ausfahren des Hauptzylinders 48 wird der Antriebshebel 47 im Gegenuhrzeigersinn um den Lagerpunkt 47A geschwenkt. Durch die Koppelung mittels des Antriebslenkers 46 folgt der Verdeckhebel 45 dieser Schwenkbewegung. Die mit dem Lenkerwinkel 42 mittels der Arretierung 44 starr verbundene Lenkerstange 41 führt das Heckteil 38 zusätzlich durch eine Schwenkbewegung um den Lagerpunkt 42A des Lenkerwinkels 42. Durch das Ausfahren des Hauptzylinders 48 vollführt das Heckteil 38 eine Schwenkbewegung, in deren erster Phase es nach außen vom hinteren Dachteil 37 und einer Verdeckklappe 61 abgehoben wird, auf der es im geschlossenen Zustand von oben her dichtend aufsitzt. In der zweiten Phase der Schwenkbewegung wird das Heckteil 38 über das hintere Dachteil 37 geschwenkt. Dabei wird der Haltebügel 52, wie bereits vorstehend beschrieben, mit nach oben geschleppt und bewirkt die Verriegelung des Heckteiles 38 mit dem hinteren Dachteil 37. In der in Fig. 15 dargestellten nunmehr erreichten Position werden die seitlichen Dachteile 35 vom vorderen Windlauf gelöst und seitlich an das hintere Dachteil 37 angeschwenkt. Anschließend wird der Hauptzylinder 48 eingezogen, wodurch das aus seitlichen Dachteilen 35, öffnungsfähigem Dachteil 36, hinterem Dachteil 37 und Heckteil 38 gebildete Dachpaket in die in Fig. 16 gezeigte Position nach hinten geschwenkt wird. Das Dachpaket stützt sich dabei auf dem Verdeckhebel 45, der Lenkerstange 41 und dem Dachhebel 49 ab. Vor der Schwenkbewegung aus der in Fig. 15 dargestellten Position in die in Fig. 16 dargestellte Position wurde die Verdeckklappe 61 mit ihrer Vorderkante nach oben geschwenkt, um dadurch den Stauraum 62 im hinteren Teil des Fahrzeuges freizugeben. In der in Fig. 16 dargestellten Position wird die Arretierung 44 zwischen Lenkerstange 41 und Lenkerwinkel 42 aufgehoben, sodaß sich beim vollständigen Einfahren des Hauptzylinders 48 das Dachpaket flach im Stauraum 62 ablegt und dadurch an die Kontur des Fahrzeuges anpaßt. Nach vollständigem Einziehen in den Stauraum 62 gemäß Fig. 17 wird die Verdeckklappe 61 geschlossen. Das Fahrzeug bietet nunmehr das Aussehen eines Cabriolets mit vollständig versenktem Verdeck.

Der Schließvorgang beider Dachmodule läuft jeweils in umgekehrter Reihenfolge zum beschriebenen Öffnungsvorgang ab. Es versteht sich für den Fachmann, daß alle vorstehend bei beiden Varianten in der Einzahl angesprochenen Teile für das Verschwenken und Verriegeln von Dachteilen jeweils auf beiden Fahrzeugseiten vorgesehen sind. Auch bei der zweiten Variante sind die karosseriefesten Befestigungspunkte, wie der Lagerbock 43, das Lager 48B des Hauptzylinders 48, die Lagerung 49B des Dachhebels 49 sowie die Lagerung des Führungsbolzens 51, vorzugsweise in einer Kassette zusammengefaßt, die über horizontale und vertikale Langlöcher gegenüber der Karosserie 32 bei der Montage justierbar ist.

Durch die Erfindung wird ein umwandelbares Fahrzeugdach geschaffen, das in geschlossenem Zustand aufgrund der ausschließlich dabei verwendeten Festteile hinsichtlich Witterungseinflüssen und Unfallgefahren einen vollwertigen Schutz einer geschlossenen Limousine bietet, welches in eingefahrenem Zustand jedoch alle Vorteile eines Cabriolets bietet. Aufgrund der Aufteilung des Fahrzeugdaches in ein hinteres Dachteil und ein über dieses schwenkbares Heckteil reduziert sich der erforderliche Stauraum für das gesamte Dachpaket und die Stoßstelle vom Fahrzeugdach zur karosseriefesten Verdeckklappe 20 bzw. 61 wird hinsichtlich der Dichtungseigenschaften und des Toleranzausgleiches leichter handhabbar.

Durch die Zusammenfassung aller karosseriefesten Befestigungspunkte des Dachmoduls an einer Kassette wird die Vorprüfung und die Montage eines solchen wesentlich erleichtert.

### Bezugszeichenliste

- 1: Fahrzeug
- 2: Karosserie
- 3: Fahrzeugdach
- 4: Windlauf (vorderes Dachteil)
- 5: seitliche Dachteile
- 6: öffnungsfähiges Dachteil (Deckel)
- 7: hinteres Dachteil
- 8: Heckteil
- 9: Heckscheibe
- 10: Blechteil an Verdeckklappe 20
- 11: Hydraulikzylinder
- 12: Hydraulikzylinder
- 13: Dreieckhebel
- 13A: oberer Schenkel (von 13)
- 13B: unterer Schenkel (von 13)
- 13C: Schwenkpunkt (von 13)
- 14: Schwenkzylinder
- 15: Antrieb für seitl. Dachteile
- 16: Antrieb für Deckel (6)
- 17: Schwenkhebel (von 7)
- 18: Teleskopführung
- 19: Stauraum
- 20: Verdeckklappe
- 20A: seitliche Verdeckklappen
- 21: Kassette
- 22: Dichtung
- 23: Trennwand
- 24: Kofferraum
- 25: Seitenscheibe
- 26: hinteres Seitenfenster
- 27: Befestigungspunkte
- 28: Vordersitzlehne
- 29: Rücksitzlehne
- 30: Windschott
- 31: Fahrzeug
- 32: Karosserie
- 33: Fahrzeugdach
- 35: seitliche Dachteile
- 36: öffnungsfähiges Dachteil (Deckel)
- 37: hinteres Dachteil
- 38: Heckteil
- 39: Heckscheibe
- 41: Lenkerstange
- 42: Lenkerwinkel
- 43: Lagerbock
- 44: Arretierung
- 45: Verdeckhebel
- 46: Antriebslenker
- 47: Antriebshebel
- 48: Hauptzylinder
- 48B: Lager Hauptzylinder
- 49: Dachhebel
- 50: Kulisse
- 51: Führungsbolzen
- 52: Haltebügel
- 52A: Anlenkpunkt
- 52B: Gleitstift
- 53: Riegelteil
- 54: Aufnahme
- 55: Anlagenase
- 56: Hydraulikzylinder
- 57: Riegelnase
- 58: Riegelfalle
- 59: Schaltbügel
- 60A,B: Mikroschalter
- 61: Verdeckklappe
- 62: Stauraum
- 63: Auslaufkabel
- 64: Führungsstück
- 65: Riegelstift
- 66: Bohrung (an 54)
- 67: Bohrung (an 53)

## Patentansprüche

1. Umwandelbares Fahrzeugdach mit einem hinteren Dachteil (7, 37), sowie mit einem an das hintere Dachteil (7, 37) anschließenden Heckteil (8, 38), bei dem das hintere Dachteil (7, 37) mit dem Heckteil (8, 38), sowie gegebenenfalls weiteren Dachteilen (5, 35; 6, 36) in einen rückwärtig angeordneten Stauraum (19, 62) verfahrbar sind, **dadurch gekennzeichnet**, daß das Heckteil (8) zum vollständigen Versenken des Daches zunächst über das hintere Dachteil (7, 37) schwenkbar und anschließend gemeinsam mit dem hinteren Dachteil (7, 37) in den Stauraum (19, 62) verschwenkbar ist.

2. Fahrzeugdach nach Anspruch 1, **dadurch gekennzeichnet**, daß das Heckteil (8, 38) vor dem Verschwenken in den Stauraum (19, 62) mit dem hinteren Dachteil (7, 37) verriegelbar ist.

3. Fahrzeugdach nach Anspruch 1 oder 2, **dadurch gekennzeichnet**, daß es wenigstens ein während der Fahrt öffnungsfähiges Dachteil (Deckel 6, 36) umfaßt, das an in seitlich davon liegenden Dachteilen (5, 35) angeordneten Führungen in Fahrzeuglängsrichtung in beliebige Öffnungspositionen verfahrbar ist.

4. Fahrzeugdach nach Anspruch 3, **dadurch gekennzeichnet**, daß die seitlichen Dachteile (5, 35) am hinteren Dachteil (7, 37) gelagert sind, unter oder über welches das öffnungsfähige Dachteil (Deckel 6, 36) in geöffneter Position verfahrbar ist.

5. Fahrzeugdach nach Anspruch 3 oder 4, **dadurch gekennzeichnet**, daß die seitlichen Dachteile (5, 35) mit einem feststehenden vorderen Dachteil (Windlauf 4) verriegelbar sind.

6. Fahrzeugdach nach einem der Ansprüche 3 bis 5, **dadurch gekennzeichnet**, daß die seitlichen Dachteile (5, 35) nach innen an das hintere Dachteil (7, 37) anschwenkbar sind.

7. Fahrzeugdach nach Anspruch 1, **dadurch gekennzeichnet**, daß das Heckteil (8, 38) eine Heckscheibe (9, 39) umfaßt.

8. Fahrzeugdach nach Anspruch 1, **dadurch gekennzeichnet**, daß der Stauraum (19, 62) mittels einer Verdeckklappe (20, 61) verschließbar ist, auf der das Heckteil (8, 38) in seiner Grundposition von oben her dichtend anliegt.

9. Fahrzeugdach nach einem der vorhergehenden Ansprüche, **dadurch gekennzeichnet**, daß das Heckteil (8, 38) vor dem Verschwenken über das hintere Dachteil (7, 37) anhebbar ist.

10. Fahrzeugdach nach einem der vorhergehenden Ansprüche, **dadurch gekennzeichnet**, daß das Heckteil (8) mittels zweier ausfahrbarer Zylinder (Hydraulikzylinder 11,12) an einem schwenkbar an der Karosserie (2) angeordneten Hebel (13) gelagert ist.

11. Fahrzeugdach nach Anspruch 10, **dadurch gekennzeichnet**, daß der Hebel (13) als Dreieckshebel mit zwei am karosseriefesten Schwenkpunkt (13C) zusammenlaufenden Schenkeln (13A,13B) ausgebildet ist, wobei am äußeren Ende der Schenkel (13A bzw. 13B) jeweils einer der ausfahrbaren Zylinder (12 bzw. 11) mit seinem unteren Ende angelenkt ist.

12. Fahrzeugdach nach Anspruch 11, **dadurch gekennzeichnet**, daß am unteren der Schenkel (13B) ein mit seinem anderen Ende karosseriefest gelagerter Schwenkzylinder (14) angelenkt ist.

13. Fahrzeudach nach einem der vorhergehenden Ansprüche, **dadurch gekennzeichnet**, daß das hintere Dachteil (7) über einen Schwenkhebel (17) mit der Karosserie verbunden ist.

14. Fahrzeugdach nach einem der Ansprüche 10 bis 13, **dadurch gekennzeichnet**, daß der Schwenkpunkt (13C) des Hebels (Dreieckshebel 13) sowie die unteren Anlenkpunkte des Schwenkzylinders (14) und des Schwenkhebels (17) an einer Kassette (21) angeordnet sind, die ihrerseits an Befestigungspunkten (27) der Karosserie (2) des Fahrzeugs (1) justierbar befestigt ist.

15. Fahrzeugdach nach einem der Ansprüche 1 bis 9, **dadurch gekennzeichnet**, daß das Heckteil (38) bei seinen Schwenkbewegungen mittels zweier schwenkbar an der Karosserie (32) angeordneter Hebel (Verdeckhebel 45, Lenkerstange 41) geführt ist.

16. Fahrzeugdach nach Anspruch 15, **dadurch gekenzeichnet**, daß einer der Hebel (Verdeckhebel 45) mit einem Hydraulikzylinder (Hauptzylinder 48) gekoppelt ist.

17. Fahrzeugdach nach einem der Ansprüche 15 oder 16, **dadurch gekennzeichnet**, daß beide Hebel (Verdeckhebel 45, Lenkerstange 41) ein Viergelenk bilden, in dem das Heckteil (38) eine Koppel und die Karosserie (32) oder ein mit dieser fest verbundenes Teil (Lagerbock 43) das Gestell bilden.

18. Fahrzeugdach nach Anspruch 17, **dadurch gekennzeichnet**, daß der eine Hebel (Lenkerstange 41) über ein zusätzliches Getriebeglied (Lenkerwinkel 42) mit der Karosserie (32) verbunden ist, gegenüber dem er mittels einer Arretierung (44) verriegelbar ist, die in der letzten Phase des Verschwenkens in den Stauraum (62) lösbar ist.

19. Fahrzeugdach nach einem der Ansprüche 2 bis 18, **dadurch gekennzeichnet**, daß zur Verriegelung des Heckteils (8, 38) mit dem hinteren Dachteil (7, 37) ein Haltebügel (52) vorgesehen ist, der mit einem Ende schwenkbar am Heckteil (8, 38) gelagert ist und mit einem Gleitstift (52B) während des Verschwenkens des Heckteils (8, 38) über das hintere Dachteil (7, 37) in eine Kulisse (50) eingreift, welche ein Riegelteil (53) des Haltebügels (52) in eine Aufnahme (54) am hinteren Dachteil (7, 37) einführt.

20. Fahrzeugdach nach Anspruch 19, **dadurch gekennzeichnet**, daß das Riegelteil (53) mittels eines von einem Auslaufkabel (63) eines das öffnungsfähige Dachteil (Deckel 6, 36) betätigenden Antriebes (16) bedienbaren Rastelementes (Riegelstift 65) mit der Aufnahme (54) verrastbar ist.

21. Fahrzeug zur Ausstattung mit einem Fahrzeugdach gemäß einem der vorhergehenden Ansprüche, bei dem der Stauraum (19) hinter den Vordersitzen (28) angeordnet ist, **gekennzeichnet durch** eine eine Sitzfläche und eine Rücksitzlehne (29) umfassende hintere Sitzbank, die im aufgestellten Zustand des Fahrzeugdaches (3) als Notsitzbank nutzbar ist und deren Rücksitzlehne (29) zur Freigabe des Stauraumes (19) vor der Umwandlung des Daches hinter die Lehne (28) der Vordersitze verfahrbar ist.

22. Fahrzeugdach nach Anspruch 21, **dadurch gekennzeichnet**, daß in der Rücksitzlehne (29) der Notsitzbank ein ausfahrbares Windschott (30) angeordnet ist.

## Claims

1. A convertible vehicle roof with a rear roof part (7,37) and with a rigid rear part (8,38) adjoining the rear roof part (7,37) and in which the rear roof part (7,37) with the rear part (8,38) and possibly further roof parts (5,35; 6,36), can be moved into a rearwardly disposed stowage space (19,62), characterised in that for complete concealment of the roof, the rear part (8) is initially pivotable over the rear roof part (7,37) and then into the stowage space (19,62) jointly with the rear roof part (7,37).

2. A vehicle roof according to Claim 1, characterised in that the rear part (8,38) can be interlocked with the rear roof part (7,37) prior to being pivoted into the stowage space (19,62).

3. A vehicle roof according to Claim 1 or 2, characterised in that it comprises at least one roof part (cover 6,36) which can be opened during driving and which is adapted for displacement into any desired open positions in the longitudinal direction of the vehicle on guides disposed in roof parts (5,35) located laterally of the roof part (6,36).

4. A vehicle roof according to Claim 3, characterised in that the lateral roof parts (5,35) are supported on the rear roof parts (7,37) under or over which the openable roof part (cover 6,36) is movable in the opened position.

5. A vehicle roof according to Claim 3 or 4, characterised in that the lateral roof parts (5,35) can be interlocked with a fixed front roof part (windshield support 4).

6. A vehicle roof according to one of Claims 3 to 5, characterised in that the lateral roof parts (5,35) can be pivoted inwardly against the rear roof part (7,37).

7. A vehicle roof according to Claim 1, characterised in that the rear part (8,38) comprises a rear window (9,39).

8. A vehicle roof according to Claim 1, characterised in that the stowage space (19,62) can be closed by means of a cover flap (20,61) on which, in its basic position, the rear part (8,38) bears in sealing-tight fashion from above.

9. A vehicle roof according to one of the preceding Claims, characterised in that prior to pivoting, the rear part (8,38) can be raised over the rear roof part (7,37).

10. A vehicle roof according to one of the preceding Claims, characterised in that the rear part (8) is mounted on a lever (13) which is pivotally disposed on the bodywork (2) by means of two extendable cylinders (hydraulic cylinders 11,12).

11. A vehicle roof according to Claim 10, characterised in that the lever (13) is constructed as a triangular lever with two arms (13A, 13B) which converge at a pivot point (13C) rigid with the body, whereby a bottom end of each of the extendable cylinders (12,11) is articulated on the respective outer end of the arms (13A, 13B).

12. A vehicle roof according to Claim 11, characterised in that a pivoting cylinder (14) is articulated on the lower of the arms (13B) and has its other end fixed to the bodywork.

13. A vehicle roof according to one of the preceding claims, characterised in that the rear roof part (7) is connected to the bodywork via a pivotable lever (17).

14. A vehicle roof according to one of claims 10 to 13, characterised in that the pivot point (13C) of the lever (triangular lever 13) as well as the lower articulation points of the pivotable cylinder (14) and of the pivotable lever (17) are disposed on a cassette (21) which is in turn adjustably fixed to attachment points (27) on the bodywork (2) of the vehicle (1).

15. A vehicle roof according to one of claims 1 to 9, characterised in that during its pivoting movements the rear part (38) is guided by means of two levers (hood lever 45, link rod 41) pivotably disposed on the bodywork (32).

16. A vehicle roof according to Claim 15, characterised in that one of the levers (hood lever 45) is coupled to a hydraulic cylinder (main cylinder 48).

17. A vehicle roof according to one of Claims 15 or 16, characterised in that both levers (hood lever 45, link rod 41) form a four-bar mechanism in which the rear part (38) forms a connecting rod and the bodywork (32) or a part (bearing lock 43) rigidly connected to it forms the frame.

18. A vehicle roof according to Claim 17, characterised in that one lever (link rod 41) is connected via an additional transmission member (angular link 42) in respect of which it can be interlocked by means of a lock (44) which can be released in the final phase of pivoting into the stowage space (62).

19. A vehicle roof according to one of Claims 2 to 18, characterised in that for interlocking the rear part (8,38) to the rear roof part (7,37), a retaining bracket (52) is provided which has one end pivotally mounted on the rear part (8,38) and has a slide pin (52B) which engages a connecting member (50) during pivoting of the rear part (8,38) over the rear roof part (7,37), said connecting member introducing a locking part (53) of the retaining bracket (52) into a housing (54) on the rear roof part (7,37).

20. A vehicle roof according to Claim 19, characterised in that the locking part (53) can be locked together with the housing (54) by means of a catch element (bolt pin 65) operable by means of a drive cable (63) of a drive (16) which actuates the openable roof part (cover 6,36).

21. A vehicle to be equipped with a vehicle roof according to one of the preceding Claims, in which the stowage space (19) is disposed behind the front seats (28), characterised by a rear bench seat comprising a sitting area and a back rest (29) and which, when the vehicle roof (3) is in the raised state, can be used as an emergency bench seat and of which the back rest (29) is adapted for displacement behind the back rest (28) of the front seats in order to expose the stowage space (19) prior to conversion of the roof.

22. A vehicle roof according to Claim 21, characterised in that an extendable wind deflector (30) is disposed in the back rest (29) of the emergency bench seat.

## Revendications

1. Toit de véhicule qui peut se transformer, comprenant une partie postérieure de toit (7, 37), ainsi qu'une partie arrière (8, 38), qui se raccorde à la partie postérieure de toit (7, 37), toit dans lequel la partie postérieure (7, 37) peur être amenée avec la partie arrière (8, 38), ainsi que le cas échéant d'autres parties du toit (5, 35 ; 6, 36) dans un espace de rangement (19, 62) disposé à l'arrière,
caractérisé en ce que
la partie arrière (8) peut pivoter pour abaisser complètement le toit d'abord sur la partie postérieure (7, 37) et ensuite peut pivoter en même temps que la partie postérieure (7, 37) dans l'espace de rangement (19, 62).

2. Toit de véhicule selon la revendication 1,
caractérisé en ce que
la partie arrière du toit (8, 38) peut être verrouillée avec la partie postérieure du toit (7, 37) avant le pivotement dans l'espace de rangement (19, 62).

3. Toit de véhicule selon la revendication 1 ou 2,
caractérisé en ce qu'
il comprend au moins une partie de toit (couvercle 6, 36) qui peut s'ouvrir pendant la marche du véhicule, partie que l'on peut amener dans les positions d'ouverture que l'on veut dans le sens longitudinal du véhicule sur des guides disposés dans des parties du toit (5, 35) qui se trouvent sur le côté.

4. Toit de véhicule selon la revendication 3,
caractérisé en ce que
les parties de toit latérales (5, 35) sont montées sur la partie postérieure du toit (7, 37), au dessus ou au dessous de laquelle la partie du toit, qui est susceptible de s'ouvrir, (couvercle 6, 36) peut être amenée en position ouverte.

5. Toit de véhicule selon la revendication 3 ou 4,
caractérisé en ce que
les parties de toit latérales (5, 35) peuvent être verrouillées avec une partie de toit antérieure fixe (auvent 4).

6. Toit de véhicule selon la revendication 3 à 5,
caractérisé en ce que
les parties de toit latérales (5, 35) peuvent pivoter vers l'intérieur sur la partie postérieure du toit (7, 37).

7. Toit de véhicule selon la revendication 1,
caractérisé en ce que
la partie intérieure (8, 38) comprend une lunette arrière (9, 39).

8. Toit de véhicule selon la revendication 1,
caractérisé en ce que
l'espace de rangement (19, 62) peut être fermé au moyen d'un volet de recouvrement (20, 61), sur lequel la partie arrière (8, 38) repose de façon étanche à partir du haut dans sa position de base.

9. Toit de véhicule selon l'une des revendications précédentes,
caractérisé en ce que
la partie arrière (8, 38) peut se soulever avant de pivoter sur la partie postérieure du toit (7, 37).

10. Toit de véhicule selon l'une des revendications précédentes,
caractérisé en ce que
la partie arrière (8) est montée au moyen de deux vérins, qui peuvent se déployer (vérins hydrauliques 11, 12), sur un levier (13), disposé de façon à pouvoir pivoter sur la carrosserie (2).

11. Toit de véhicule selon la revendication 10,
caractérisé en ce que
le levier (13) est constitué sous la forme d'un levier triangulaire, avec deux bras (13A, 13B) se rejoignant en un point de pivotement fixe (13C) fixe sur la carrosserie, l'un des vérins déployables (12 ou 11) étant respectivement articulé sur l'extrémité supérieure des bras (13A ou 13B) par son extrémité inférieure.

12. Toit de véhicule selon la revendication 11,
caractérisé en ce que
sur la partie inférieure des bras (13B) est articulé un vérin pivotant(14), monté de façon fixe par son autre extrémité sur la carrosserie.

13. Toit de véhicule selon l'une des revendications précédentes,
caractérisé en ce que
la partie postérieure du toit (7) est relié au moyen d'un levier pivotant (17) à la carrosserie.

14. Toit de véhicule selon l'une des revendications 10 à 13,
caractérisé en ce que
le point de pivotement (13C) du levier (levier triangulaire 13) ainsi que les points inférieurs d'articulation du vérin pivotant (14) et du levier pivotant (17) sont disposés sur une cassette (21), qui est fixée de son côté sur des points de fixation (27) de la carrosserie (2) du véhicule (1) en pouvant être ajustée.

15. Toit de véhicule selon l'une des revendications 1 à 9,
caractérisé en ce que
la partie arrière (38) est guidée lors de ses mouvements de pivotement au moyen de deux leviers (levier de recouvrement 45, bielle de direction 41), disposés de façon à pouvoir pivoter sur la carrosserie(32).

16. Toit de véhicule selon la revendication 15,
caractérisé en ce que
l'un des leviers (levier de recouvrement 45) est accouplé à un vérin hydraulique (vérin principal 48).

17. Toit de véhicule selon l'une des revendications 15 ou 16,
caractérisé en ce que
les deux leviers (levier de recouvrement 45, bielle de direction 41) forment un quadrilatère articulé, dans lequel la partie arrière (38) constitue une bielle et la carrosserie (32) ou une partie reliée de façon fixe à celle-ci (sabot d'appui 43) forme le bâti.

18. Toit de véhicule selon la revendication 17,
caractérisé en ce que
l'un des leviers (bielle de direction 41) est reliée au moyen d'un organe de transmission additionnel (bras angulaire de suspension 42) à la carrosserie (32), par rapport auquel on peut le verrouiller au moyen d'une butée (44), qui peut être relâchée dans la dernière phase du pivotement dans l'espace de rangement (62).

19. Toit de véhicule selon l'une des revendications 2 à 18,
caractérisé en ce que
l'on prévoit pour verrouiller la partie arrière (8, 38) avec la partie postérieure du toit (7, 37) un étrier d'arrêt (52), qui est monté par une extrémité de façon à pivoter sur la partie arrière (8, 38) et vient en prise dans une coulisse (50) par un tenon de glissement (52B) pendant le pivotement de la partie arrière (8, 38) sur la partie postérieure du toit (7, 37), coulisse (50) qui introduit une pièce de verrouillage (53) de l'étrier d'arrêt (52) dans un logement (54) sur la partie postérieure du toit (7, 37).

20. Toit de véhicule selon la revendication 19,
caractérisé en ce que
la pièce de verrouillage (53) peut être encliquetée au moyen d'un élément d'encliquetage (téton de verrouillage 65) qui peut être commandé par un câble de décharge (63) d'un mécanisme d'entraînement (16) actionnant la partie du toit (couvercle 6, 36), qui est susceptible de s'ouvrir.

21. Véhicule destiné à être équipé d'un toit selon l'une des revendications précédentes, dans lequel l'espace de rangement (19) est disposé derrière les sièges avant (28),
caractérisé par
une banquette arrière comprenant un siège et un dossier (29), banquette qui peut être utilisée, quand le toit du véhicule (3) est en position déployée, comme banquette de secours et dont le dossier (29) peut être amené, pour libérer l'espace de rangement (19) avant la transformation du toit, derrière le dossier (28) des sièges avant.

22. Toit de véhicule selon la revendication 21,
caractérisé en ce que
l'on dispose dans le dossier (29) de la banquette de secours un becquet déployable (30).
